# EUROPEAN PATENT SPECIFICATION

(11) **EP 4 113 513 B1**
(45) Date of publication and mention of the grant of the patent: **22.01.2025**
(21) Application number: 20929236.6
(22) Date of filing: 31.03.2020
(51) Int. Cl.: G10L 21/0208, H04M 9/08, H04R 3/00, G10K 11/178, G10L 21/0216

(54) **METHOD AND DEVICE FOR AUDIO DENOISING**
VERFAHREN UND VORRICHTUNG ZUR TONRAUSCHUNTERDRÜCKUNG
PROCÉDÉ ET DISPOSITIF DE DÉBRUITAGE AUDIO

(43) Date of publication of application: 04.01.2023
(73) Proprietor: Shenzhen Yinwang Intelligent Technologies Co., Ltd., Shenzhen, Guangdong 518129 (CN)
(72) Inventor: WU, Sheng, Shenzhen, Guangdong 518129 (CN); LIU, Chengming, Shenzhen, Guangdong 518129 (CN); NIE, Weiran, Shenzhen, Guangdong 518129 (CN)
(74) Representative: Pfenning, Meinig & Partner mbB
(86) International application number: PCT/CN2020/082613
(87) International publication number: WO 2021/196042

(56) References cited:
- CN-A- 1 234 895
- CN-A- 103 262 571
- CN-A- 105 989 847
- CN-A- 110 600 048
- JP-A- 2005 128 312
- US-A1- 2007 058 799
- US-A1- 2017 193 976
- US-A1- 2018 068 672
- US-B2- 8 462 962
- US-B2- 8 983 085

## Description

### TECHNICAL FIELD

The present invention relates to the field of automated driving technologies, and in particular, to an audio denoising method and an apparatus.

### BACKGROUND

A vehicle-mounted audio system may include components such as a microphone and a speaker. The microphone may collect an audio signal entered by a user, and the speaker may play the audio signal to the outside. The audio signal collected by the microphone is affected by the speaker. How to denoise the audio signal collected by the microphone is a technical problem to be resolved currently. It is known from US 8 462 962 B2, US 2018/068672 A1, US 8 983 085 B2 how to denoise an audio signal using a noise suppression procedure followed by an echo suppression procedure.

### SUMMARY

Embodiments of this application provide an audio denoising method and an apparatus according to independent claims 1 and 7 as well as a computer-readable storage medium and a computer program product according to independent claims 8 and 9, to denoise an audio signal collected by a first microphone and a second microphone.

In the foregoing solution, that the first microphone and the second microphone are disposed in different areas in the target environment may mean that a microphone deployed in a vehicle cabin is disposed at different locations in the vehicle based on a collection requirement. For example, a location of the microphone may be disposed based on a general distribution situation that is of passengers in the vehicle and that exists when the vehicle is in use. A microphone disposed in an area of a driver or disposed close to the driver is a microphone configured to collect a voice of the driver. Similarly, a microphone disposed in an area of a passenger seat or disposed in an area of a back seat is configured to collect a voice signal of a passenger in the passenger seat or a passenger in the back seat.

Usually, although the first microphone is to collect an audio signal of a target acoustic source, due to connectivity of space inside the vehicle, both an audio signal played in a different area and a voice signal of a person interfere with audio collection of a target object and a target acoustic source that are to be collected. Therefore, a collected first microphone signal is a mixed audio signal of various sound signals collected in a driving seat, and similarly, another microphone also collects a mixed signal that is of all acoustic sources and that can be received at a current location.

### BRIEF DESCRIPTION OF DRAWINGS

FIG. 1 is a schematic diagram of a structure of a vehicle-mounted audio system according to an embodiment of this application;
FIG. 2 is a schematic flowchart of an audio denoising method according to an embodiment of this application;
FIG. 3 is a schematic diagram of a 6-zone vehicle-mounted audio system according to an embodiment of this application;
FIG. 4 is a schematic diagram of a principle of an audio denoising method according to an embodiment of this application;
FIG. 5a is a schematic diagram of a comparison between audio signals that correspond to a driving seat and that exist before and after denoising according to an embodiment of this application;
FIG. 5b is a schematic diagram of a comparison between audio signals that correspond to a passenger seat and that exist before and after denoising according to an embodiment of this application;
FIG. 5c is a schematic diagram of a comparison between audio signals that correspond to a left back seat and that exist before and after denoising according to an embodiment of this application;
FIG. 5d is a schematic diagram of a comparison between audio signals that correspond to a right back seat and that exist before and after denoising according to an embodiment of this application;
FIG. 6 is a schematic diagram of a structure of an apparatus according to an embodiment of this application; and
FIG. 7 is a schematic diagram of another structure of an apparatus according to an embodiment of this application.

### DESCRIPTION OF EMBODIMENTS

The following describes the technical solutions in embodiments of this application with reference to the accompanying drawings in embodiments of this application. In descriptions of this application, unless otherwise specified, "/" indicates an "or" relationship between associated objects. For example, A/B may indicate A or B. In this application, "and/or" describes only an association relationship for describing the associated objects, and represents that three relationships may exist. For example, A and/or B may represent the following three cases: Only A exists, both A and B exist, and only B exists. A and B may be singular or plural. In addition, in the descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one of a, b, or c may indicate: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that have basically the same functions or purposes. A person skilled in the art may understand that the terms such as "first" and "second" do not limit a quantity or an execution sequence, and the terms such as "first" and "second" do not indicate a definite difference.

In addition, a network architecture and a service scenario described in embodiments of this application are intended to describe the technical solutions in embodiments of this application more clearly, and constitute no limitation on the technical solutions provided in embodiments of this application. A person of ordinary skill in the art may learn that with evolution of the network architecture and emergence of a new service scenario, the technical solutions provided in embodiments of this application are also applicable to similar technical problems.

The following describes names or terms used in embodiments of this application.

### 1. Adaptive filtering

An adaptive filtering algorithm in embodiment of this application includes but is not limited to a least mean square (least mean square, LMS) adaptive filter, a normalized least mean square (normalized least mean square, NLMS) adaptive filter, a recursive least squares (recursive least squares, RLS) adaptive filter, affine projection (affine projection, AP), a frequency-domain adaptive filter (frequency-domain adaptive filter, FDAF), a multi-direction adaptive filter (multi-direction adaptive filter, MDAF), a windowing frequency domain adaptive filter (windowing frequency domain adaptive filtering, WDAF), or the like. In embodiments of this application, a WDAF filtering algorithm is used as an example for description.

A principle of the adaptive filtering algorithm may be as follows: A transfer function from a noise source to a target acoustic source is determined through modeling performed based on the adaptive filtering algorithm; and the noise source is filtered by using the transfer function, to obtain a filtered output signal. The filtered output signal is impact of the noise source on the target acoustic source. It is assumed that a microphone 1 is configured to collect a voice signal V1 output by an acoustic source 1, and an acoustic source 2 is also speaking. Therefore, in addition to the voice signal V1, an audio signal collected by the microphone 1 may include noise caused by the acoustic source 2. In embodiments of this application, a transfer function h21 from the acoustic source 2 to the acoustic source 1 may be calculated based on the adaptive filtering algorithm, and a noise source V2 is filtered by using the transfer function h21, to obtain a filtered output signal V2*h21. The obtained filtered output signal is the noise caused by the acoustic source 2.

It should be noted that it is very difficult to obtain a true transfer function between two acoustic sources through modeling performed based on the adaptive filtering algorithm, and the obtained transfer function is usually approximate or close to the true transfer function between the two acoustic sources. For ease of description, descriptions are provided by using an example in which the transfer function between the two acoustic sources that is obtained through modeling performed based on the adaptive filtering algorithm is the true transfer function between the two acoustic sources. Unless otherwise specified, the obtained transfer function and the true transfer function are not distinguished.

### 2. Echo cancellation

An entire vehicle-mounted audio system includes a speaker in addition to a microphone. When the microphone collects an audio signal of a target acoustic source, the speaker plays the audio signal to the outside. The audio signal played by the speaker affects collection that is of the audio signal of the acoustic source and that is performed by the microphone. Because both the microphone and the speaker belong to the vehicle-mounted audio system, the foregoing process may be considered as follows: The entire vehicle-mounted audio system plays the audio signal to the outside when collecting the audio signal of the acoustic source. The audio signal played by the speaker to the outside may also be referred to as an echo. Canceling the impact exerted by the speaker on the audio signal collected by the microphone is also referred to as echo cancellation.

It should be noted that in descriptions of the following embodiments, a bold letter represents a vector or matrix, for example, **dₘ**(*n*). A non-bold letter represents a scalar, for example, dₘ(*n*).

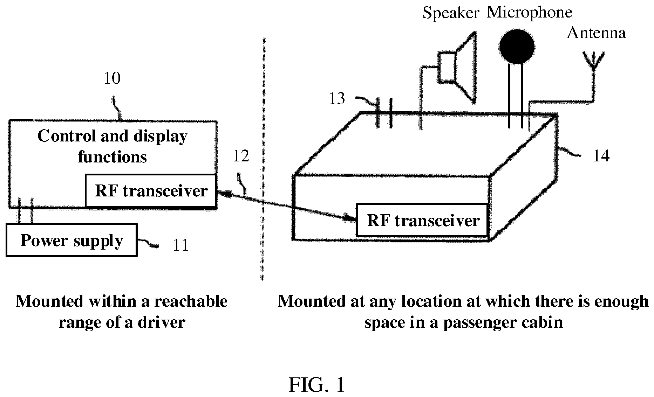

FIG. 1 is a schematic diagram of a vehicle-mounted audio system according to an embodiment of this application. For brevity, only various system aspects are described, but a user interface and a detailed style aspect are omitted. The vehicle-mounted audio system may include a station 10 and a station 14.

The station 10 includes control and display functions associated with the user interface. A visual form of a display may be a character, ordinary light, a graphic, an animation, or the like. In principle, voice output is feasible. Similarly, a controller may be in a form of a button, a rotary switch, a potentiometer, or a voice input. As shown in FIG. 1, the station has a power supply connection 11, and is connected to a vehicle-mounted battery or a vehicle power supply system, and the vehicle power supply system may be switched on/off by using a main ignition switch. This is not limited. Finally, the station 10 is connected to an RF bus/link 12 by using a radio frequency (radio frequency, RF) transceiver, and the RF bus/link 12 may be connected to an RF transceiver of the station 14, to implement communication between the station 10 and the station 14. The station 10 is usually mounted within a reachable range of a driver, for example, mounted at a location such as a dash board, a steering wheel, an armrest, or an arm of the driver.

The station 14 includes a power supply 13, and may further include a speaker, a microphone, an antenna, or the like. Usually, the station 14 may be mounted at any location at which there is enough space in a passenger cabin, and may even be mounted at a location under the dash board or inserted into the dashboard. Like the station 10, the station 14 has an RF transceiver, and the RF transceiver is connected to the RF bus\link 12, to implement communication with the station 10.

It can be learned from the foregoing descriptions that the vehicle-mounted audio system shown in FIG. 1 may include a microphone and a speaker. The microphone is configured to collect an audio signal of a target acoustic source (for example, a passenger or the driver), and the speaker is configured to play the audio signal to the outside. An audio signal collected by one microphone is mainly affected by two aspects: an audio signal output by another acoustic source, and the audio signal played by the speaker. How to denoise an audio signal collected by one microphone, for example, a first microphone is a problem to be resolved in this application.

This application provides an audio denoising method and an apparatus. The method includes: denoising, based on a second audio signal collected by a second microphone, a first audio signal collected by a first microphone, to obtain a third audio signal; and denoising the third audio signal by using a fourth audio signal output by the first speaker, to obtain a fifth audio signal. The fifth audio signal is an expected clean audio signal.

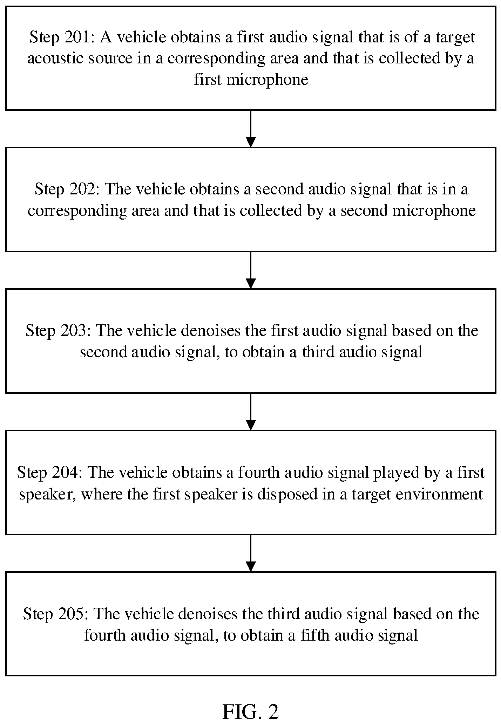

FIG. 2 is a flowchart of an audio denoising method. A procedure is executed by a vehicle. It can be understood that the vehicle may alternatively be a component (for example, a processor, a chip, or another component) in the vehicle. This is not limited. The procedure shown in FIG. 2 includes but is not limited to the following steps.

Step 201: The vehicle obtains a first audio signal that is of a target acoustic source in a corresponding area and that is collected by a first microphone.

Step 202: The vehicle obtains a second audio signal that is of a corresponding area and that is collected by a second microphone.

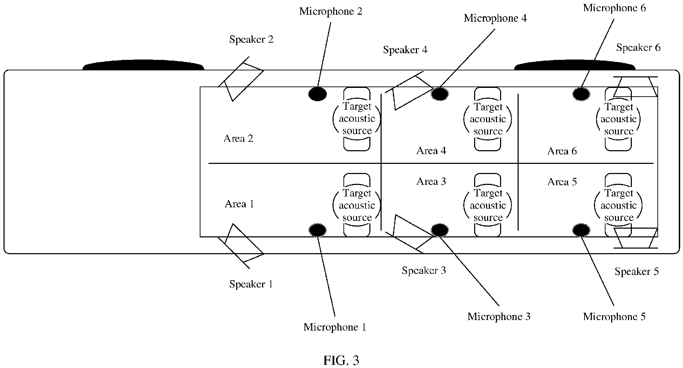

The first microphone and the second microphone are disposed in different areas in a target environment, and the first microphone and the second microphone each are configured to collect an audio signal of a target acoustic source (for example, a driver or a passenger) in an area corresponding to each of the first microphone and the second microphone. An example in which the target environment is an environment in a car cabin is used to describe the foregoing process: Usually, the car cabin may be divided into a plurality of areas based on different types of the car cabin. For example, as shown in FIG. 3, if the car cabin includes six seats, the cabin may be divided into six areas, and one microphone is disposed in each area. Optionally, one speaker may also be disposed in each area. A microphone 1 in an area 1 is configured to collect an audio signal of a target acoustic source (for example, the driver) in the area 1, and a microphone 2 in an area 2 is configured to collect an audio signal of a target acoustic source (for example, a passenger in a passenger seat) in the area 2. Processes in which microphones in an area 3 to an area 6 collect an audio signal are similar to the foregoing processes. Details are not described herein again.

In this embodiment of this application, there is usually one first microphone, and there may be one or more second microphones. With reference to the foregoing descriptions, if there is one second microphone, a corresponding solution is: denoising, by using an audio signal collected by a microphone in one area, the first audio signal collected by the first microphone. If in accordance with the claimed invention, there are a plurality of second microphones, a corresponding solution is:
denoising, by using audio signals collected by microphones in a plurality of areas, the first audio signal collected by the first microphone. In a possible implementation, as shown in FIG. 3, the audio signal collected by the microphone 1 in the area 1 may be denoised by using each of audio signals collected by microphones in the area 2, the area 3, an area 4, an area 5, and the area 6. The audio signal collected by the microphone 2 in the area 2 may be denoised by using each of audio signals collected in the area 1, the area 3, the area 4, the area 5, and the area 6. Similarly, an audio signal collected by the microphone 3 in the area 3 may be denoised by using each of audio signals collected by microphones in the area 1, the area 2, the area 4, the area 5, and the area 6. Processes of denoising audio signals of microphones corresponding to the area 4, the area 5, and the area 6 are similar to the foregoing processes. Details are not described herein again.

Step 203: The vehicle denoises the first audio signal based on the second audio signal, to obtain a third audio signal.

It can be learned from the foregoing descriptions that there may be one or more second microphones, and correspondingly, there may be one or more second audio signals. When there is one second microphone, there is also one second audio signal. A specific implementation of step 203 may be as follows: The vehicle performs adaptive filtering on the second audio signal, to obtain a first filtered output signal; the vehicle obtains a first residual signal based on a difference between the first audio signal and the first filtered output signal, where the first residual signal represents an audio signal remaining after interference from the second audio signal is removed from the first audio signal; and the vehicle obtains the third audio signal based on the first residual signal. For example, the vehicle may determine the third audio signal based on a frequency domain amplitude comparison between the first residual signal and the first audio signal. Further, the first residual signal, the first audio signal, and the third audio signal may satisfy the following formula:$\left|{D}_{zm}\left(n\right)\left[k\right]\right| = min \left\{\left|{D}_{m}\left(n\right)\left[k\right]\right|, \left|{ED}_{m , m}'\left(n\right)\left[k\right]\right|\right\} .$${D}_{m} \left(n\right) = \left[{D}_{m}\left(n\right)\left(1\right),{D}_{m}\left(n\right)\left(2\right),{D}_{m}\left(n\right)\left(3\right),...,{D}_{m}\left(n\right)\left(N\right)\right] .$

Herein, **D**ₘ(n) represents a frequency domain representation of the first audio signal, **ED**_{m,m}'(n) represents a frequency domain representation of the first residual signal, **D**_{zm}(n) represents a frequency domain representation of the third audio signal, n represents a frame sequence number of an audio signal, and k represents a frequency index sequence number of a frequency domain representation of the audio signal. **D**ₘ(n) is used as an example. A combination form of **D**ₘ(n) may be as follows:${D}_{m} \left(n\right) = \left[{D}_{m}\left(n\right)\left(1\right),{D}_{m}\left(n\right)\left(2\right),{D}_{m}\left(n\right)\left(3\right),...,{D}_{m}\left(n\right)\left(N\right)\right] .$

N represents a length of a processing window of frequency domain transformation used for the frequency domain representation of the audio signal, m represents an identifier of the first microphone, and m' represents an identifier of the second microphone.

When, in accordance with the claimed invention, there are a plurality of second microphones, there are also a plurality of second audio signals, and each second microphone corresponds to one second audio signal. A specific implementation of S203 may be as follows: The vehicle separately performs the following processing on each second audio signal, to obtain a residual signal corresponding to each second audio signal: performing adaptive filtering on the second audio signal, to obtain a second filtered output signal; and obtaining a second residual signal based on a difference between the first audio signal and the second filtered output signal. Through processing in the foregoing process, for each second audio signal, a second residual signal corresponding to each second audio signal may be obtained, and a plurality of second residual signals may be obtained in total for the plurality of second audio signals. In this case, the vehicle may obtain the third audio signal based on the plurality of second residual signals. For example, the vehicle may determine the third audio signal based on a frequency domain amplitude comparison between the plurality of second residual signals and the first audio signal. Further, the plurality of second residual signals, the first audio signal, and the third audio signal may satisfy the following formula: $\left|{D}_{zm}\left(n\right)\left[k\right]\right| = min \left\{\left|{D}_{m}\left(n\right)\left[k\right]\right|, \left|{ED}_{m , m}′\left(n\right)\left[k\right]\right|\right\} .$

Herein, **D**ₘ(n) represents a frequency domain representation of the first audio signal, **ED**_{m,m}'(n) represents a frequency domain representation of the plurality of second residual signals, **D**_{zm}(n) represents a frequency domain representation of the third audio signal, n represents a frame sequence number of an audio signal, k represents a frequency index sequence number of a frequency domain representation of the audio signal, m represents an identifier of the first microphone, and m' represents identifiers of the plurality of second microphones.

To facilitate description of the foregoing process, a specific example is provided. For example, the first audio signal collected by the first microphone is denoised by using three second audio signals collected by the three second microphones, to obtain the third audio signal. It is assumed that the three second microphones are respectively a second microphone A, a second microphone B, and a second microphone C, and second audio signals respectively corresponding to the three second microphones are a second audio signal A, a second audio signal B, and a second audio signal C. Then, adaptive filtering may be performed on the second audio signal A, to obtain a second filtered output signal A, and a second residual signal A is obtained based on a difference between the first audio signal and the second filtered output signal A. Similarly, adaptive filtering is performed on the second audio signal B, to obtain a second filtered output signal B, and a second residual signal B is obtained based on the first audio signal and the second filtered output signal B. Processing similar to the foregoing processing is performed on the second audio signal C, to obtain a second residual signal C. Finally, the third audio signal may be obtained based on a frequency domain amplitude comparison between the second residual signal A, the second residual signal B, the second residual signal C, and the first audio signal. In a possible implementation,

The frequency domain representation of the first audio signal collected by the first microphone may be expressed as [a, b, c, d]. To simplify expressions, the frequency domain representation of the first audio signal includes only four frequency elements. It is assumed that a first frequency element a is an audio signal that is of a target acoustic source and that is collected by the first microphone, a second frequency element b is a noise signal caused by an acoustic source corresponding to the second microphone A, a third frequency element c is a noise signal caused by the second microphone B, and a fourth frequency element d is a noise signal caused by the second microphone C. It should be noted that before audio denoising is performed in the method provided in this embodiment of this application, a specific useful signal and a specific noise signal in [a, b, c, d] are unknown. In this embodiment of this application, the first audio signal collected by the first microphone is denoised by using the second audio signal A collected by the second microphone A, to obtain the second residual signal A, where the second residual signal A may be represented as [a, 0, c, d]; the first audio signal collected by the first microphone is denoised by using the second audio signal B collected by the second microphone B, to obtain the second residual signal B, where the second residual signal B may be represented as [a, b, 0, d]; the first audio signal collected by the first microphone is denoised by using the second audio signal C collected by the second microphone C, to obtain a second residual signal C, where the second residual signal C may be represented as [a, b, c, 0]; and a minimum value is assigned to each frequency element in the second residual signal A ([a, 0, c, d]), the second residual signal B ([a, b, 0, d]), and the second residual signal C ([a, b, c, 0]), to obtain the third audio signal, where the third audio signal may be represented as [a, 0, 0, 0]. The third audio signal only includes a frequency element a corresponding to an audio signal of the target acoustic source and is an expected clean audio signal.

Step 204: The vehicle obtains a fourth audio signal played by a first speaker, where the first speaker is disposed in a target environment. The foregoing example is still used. The target environment may be specifically a car cabin, the car cabin may be divided into a plurality of areas, and each area may include one or more speakers. This is not limited. In the example shown in FIG. 3, descriptions are provided by using an example in which each area includes one speaker.

Step 205: The vehicle denoises the third audio signal based on the fourth audio signal, to obtain a fifth audio signal, where the fifth audio signal is an audio signal that is of the target acoustic source and that is obtained after interference is filtered out.

In this embodiment of this application, there may be one first speaker, and there may be one fourth audio signal. A specific implementation of step 205 may be as follows: The vehicle performs adaptive filtering on the fourth audio signal, to obtain a third filtered output signal; and the vehicle obtains a third residual signal based on a difference between the third audio signal and the third filtered output signal, and obtains the fifth audio signal based on the third residual signal. For example, the vehicle may determine the fifth audio signal based on a frequency domain amplitude comparison between the third audio signal and the third residual signal. Further, the third audio signal, the third residual signal, and the fifth audio signal may satisfy the following formula: $\left|{D}_{Fm}\left(n\right)\left[k\right]\right| = min \left\{\left|{D}_{zm}\left(n\right)\left[k\right]\right|, \left|E{R}_{m , s}\left(n\right)\left[k\right]\right|\right\} .$

Herein, **D_{Fm}**(n) represents a frequency domain representation of the fifth audio signal, **ER_{m,s}**(n) represents a frequency domain representation of the third residual signal, **D**_{zm}(n) represents a frequency domain representation of the third audio signal, n represents a frame sequence number of an audio signal, k represents a frequency index sequence number of a frequency domain representation of the audio signal, m represents an identifier of the first microphone, and s represents an identifier of the first speaker.

Alternatively, there are a plurality of first speakers, and each speaker plays one fourth audio signal. The plurality of first speakers correspond to a plurality of fourth audio signals. A specific implementation of step 205 may be as follows: The vehicle separately performs the following processing on each fourth audio signal, to obtain a residual signal corresponding to each fourth audio signal: performing adaptive filtering on the fourth audio signal, to obtain a fourth filtered output signal; and obtaining a fourth residual signal based on a difference between the third audio signal and the fourth filtered output signal. Through the foregoing processing, one corresponding fourth residual signal may be obtained for each fourth audio signal, and a plurality of fourth residual signals may be obtained in total for the plurality of fourth audio signals. Then, the vehicle may obtain the fifth audio signal based on the plurality of fourth residual signals. For example, the vehicle may determine the fifth audio signal based on a frequency domain amplitude comparison between the third audio signal and the plurality of fourth residual signals. For example, the third audio signal, the plurality of fourth residual signals, and the fifth audio signal may satisfy the following formula: $\left|{D}_{Fm}\left(n\right)\left[k\right]\right| = min \left\{\left|{D}_{zm}\left(n\right)\left[k\right]\right|, \left|E{R}_{m , s}\left(n\right)\left[k\right]\right|\right\} .$

Herein, **D_{Fm}**(n) represents a frequency domain representation of the fifth audio signal, **ER_{m,s}(n)** represents a frequency domain representation of the plurality of fourth residual signals, **D**_{zm}(n) represents a frequency domain representation of the third audio signal, n represents a frame sequence number of an audio signal, k represents a frequency index sequence number of a frequency domain representation of the audio signal, m represents an identifier of the first microphone, and s represents identifiers of the plurality of first speakers.

In this embodiment of this application, first, the first audio signal collected by the first microphone is denoised by using the second audio signal collected by the second microphone, to obtain the third audio signal. Then, the third audio signal is denoised by using the fourth audio signal output by the first speaker, to obtain the fifth audio signal. The fifth audio signal is an expected clean audio signal. Compared with an existing solution in which an audio signal collected by a microphone is directly denoised by using an audio signal played by a speaker, in the method, denoising overheads can be reduced, and a denoising effect can be improved. A reason is as follows: In the existing solution, an audio signal collected by one microphone needs to be denoised once based on all speakers in an entire vehicle-mounted audio system. However, in this embodiment of this application, only some speakers in the entire vehicle-mounted audio system need to be used for denoising, to achieve a good denoising effect, and reduce denoising overheads. It should be noted that in this embodiment of this application, some or all speakers in the vehicle-mounted audio system are used for denoising. This is not limited.

In an example, that the vehicle-mounted audio system includes K_{M} microphones and Ks speakers is used as an example to describe in detail the denoising procedure shown in FIG. 2. K_{M} and Ks each are a positive integer greater than or equal to 1. The vehicle-mounted audio system may be disposed in a target environment (for example, in a car cabin), the target environment may be divided into K_{M} areas, and one microphone and one or more speakers are disposed in each area. A microphone 1 in the K_{M} microphones may be disposed in an area 1 of the target environment, to collect an audio signal of a target acoustic source in the area 1. A microphone 2 may be disposed in an area 2 of the target environment, to collect an audio signal of a target acoustic source in the area 2. By analogy, a microphone K_{M} may be disposed in an area K_{M} of the target environment, to collect an audio signal of a target acoustic source in the area K_{M}. When values of K_{M} and Ks are both 6, microphones and speakers may be disposed in different areas with reference to FIG. 3.

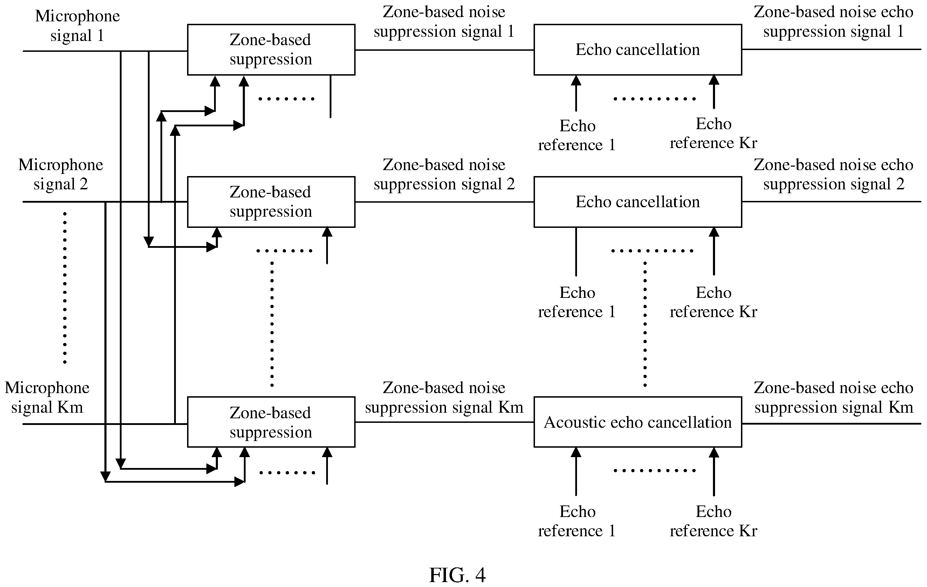

In the following embodiments, for ease of description, the audio signal that is of the target acoustic source in the area 1 and that is collected by the microphone 1 may be referred to as a microphone signal 1, the audio signal that is of the target acoustic source in the area 2 and that is collected by the microphone 2 may be referred to as a microphone signal 2, and by analogy, the audio signal that is of the target acoustic source in the area K_{M} and that is collected by the microphone K_{M} may be referred to as a microphone signal K_{M}. In the following description, unless otherwise specified, "area" and "zone" have a same concept and may be replaced with each other. Referring to FIG. 4, audio denoising processes of the K_{M} microphone signals may be as follows:

An audio denoising process of the microphone signal 1 is as follows: Zone-based suppression is performed on the microphone signal 1 by using the microphone signal 2 and a microphone signal 3 to the microphone signal K_{M} as noise references, to obtain a zone-based noise suppression signal 1. Then, echo cancellation is performed on the zone-based noise suppression signal 1 by using, as echo references, audio signals played by Kr speakers, to obtain a zone-based noise echo suppression signal 1. The zone-based noise echo suppression signal 1 is an expected clean audio signal in the area 1. Herein, 0 ≤ Kr ≤ Ks, and Ks is a total quantity of speakers in the entire vehicle-mounted audio system. It can be learned from the foregoing descriptions that the entire vehicle-mounted audio system includes Ks speakers in total. When Kr is less than Ks, it represents that an audio signal collected by a microphone is denoised by using, as echo references, audio signals output by some speakers in the vehicle-mounted audio system. For example, speaker signals of first Kr speakers close to a microphone in a current area may be selected as an echo reference. Alternatively, when Kr is equal to Ks, it represents that an audio signal collected by a microphone is denoised by using, as echo references, audio signals output by all speakers in the vehicle-mounted audio system.

An audio denoising process of the microphone signal 2 is as follows: Zone-based suppression is performed on the microphone signal 2 by using the microphone signal 1 and the microphone signal 3 to the microphone signal K_{M} as noise references, to obtain a zone-based noise suppression signal 2. Then, echo cancellation is performed on the zone-based noise suppression signal 2 by using, as echo references, audio signals played by Kr speakers, to obtain a zone-based noise echo suppression signal 2. The zone-based noise echo suppression signal 2 is an expected clean audio signal in the area 2. For descriptions of Kr, refer to the foregoing descriptions. Details are not described herein again.

Subsequent audio denoising processes of the microphone signal 3 to the microphone signal K_{M} are similar to the foregoing processes, and are not described one by one. Processes of zone-based suppression and echo cancellation are described in detail in the following embodiments.

### 1. Zone-based suppression

Zone-based suppression is performed on a microphone signal dₘ(n) collected by a microphone in an m^{th} zone by using, as a noise reference, a microphone signal d_{m'}(n) collected by a microphone in an (m')^{th} zone. Herein, m and m' each are a positive integer greater than or equal to 1 and less than or equal to K_{M}, and m is not equal to m'. In the following embodiment, an adaptive filtering algorithm WDAF ([1] Wu Sheng, Qiu Xiaojun, "A Windowing Frequency Domain Adaptive Filter for Acoustic Echo Cancellation", IEICE Transactions on Fundamentals of Electronics, Communications and Computer Sciences, Volume E92.A, Issue 10, pp. 2626-2628 (2009).) is used as an example to describe the foregoing processes:

1.1. The microphone signal dₘ(n) of the m^{th} zone is converted into frequency domain, to obtain **Dₘ**(n). A conversion process is as follows: ${D}_{m} \left(n\right) = FFT \left({d}_{m}\left(n\right)\cdot {w}_{s}\right) , where {d}_{m} \left(n\right) = \left[{d}_{m}\left(Nn-N+1\right), {d}_{m}\left(Nn-N+2\right), {d}_{m}\left(Nn-N+3\right), …, {d}_{m}\left(Nn\right)\right] .$

Herein, n represents a frame sequence number, N represents a length of a processing window, FFT represents fast Fourier transformation, **wₛ** represents a window function, and the window function satisfies the following formula: ${w}_{s} = \left[0,0,0, …, sin\left(0.5/M*pi\right), sin\left(1.5/M*pi\right), sin\left(2.5/M*pi\right), …, sin\left(\left(M-0.5\right)/M*pi\right)\right] ,$ where M indicates a length of an updating window, and first N-M elements in **wₛ** are 0.

In the foregoing two formulas, value ranges of M and N are related to a sampling frequency fs of an audio signal, and 0 < M < N < 0.1 fs. For example, when the collection frequency fs of the audio signal is 16 kHz, a value of N may be 1024, and a value of M may be 640.

1.2. Fast Fourier transformation is performed on the microphone signal d_{m'}(n) of the (m')^{th} zone, to obtain three frequency domain noise suppression reference signals. The three frequency domain noise suppression reference signals are respectively **XD_{m'}**(n), **XD_{Lm'}**(n), and **XD**_{**Cm**'}(n). ${XD}_{m ′} \left(n\right) = FFT \left({d}_{m ′}\left(n\right)\cdot {w}_{a}\right) .$

Herein, n represents a frame sequence number, FFT represents fast Fourier transformation, **wₐ** represents a window function, and the window function satisfies the following formula: **wₐ** = [sin(0.5/N*pi), sin(1.5/N*pi), sin(2.5/N*pi), ..., sin((N - 0.5)/N*pi)]; and ${XD}_{Cm ′} \left(n\right) = FFT \left({d}_{m ′}\left(n\right)\right) .$

Herein, n represents a frame sequence number, and FFT represents fast Fourier transformation. ${XD}_{Lm ′} \left(n\right) = FFT \left({d}_{m ′}\left(n-M/2\right)\right) .$

Herein, n represents a frame sequence number, FFT represents fast Fourier transformation, and **d**_{**m**'}(n-M/2) = [d_{m'}(Nn - N + 1 - M/2), d_{m'}(Nn - N + 2 - M/2), ..., d_{m'}(Nn - M/2)].

1.3. Adaptive filtering is performed on the three frequency domain noise suppression reference signals **XD_{m'}**(n), **XD_{Lm'}**(n), and **XD_{Cm'}**(n), to obtain filtered output signals **yd**_{m,m}'. A specific process may include the following two steps 1.3.1 and 1.3.2.

1.3.1. Vector point multiplication is performed on an N-dimensional noise suppression filter vector **HD**_{m,m}(n) and each of **XD_{Lm'}**(n) and **XD_{Cm'}**(n) is obtained.

A process is as follows: ${YD}_{Lm ,m ′} \left(n\right) = {XD}_{Lm ′} \left(n\right) \cdot {HD}_{m ,m ′} \left(n\right) , where m = 1 , 2 , … , {K}_{M} , m ′ = 1 , 2 , … , {K}_{M} , and m ′ \neq m$ ${YD}_{Cm ,m ′} \left(n\right) = {XD}_{Cm ′} \left(n\right) \cdot {HD}_{m ,m ′} \left(n\right) , where m = 1 , 2 , … , {K}_{M} , m ′ = 1 , 2 , … , {K}_{M} , and m ′ \neq m$

1.3.2. Inverse fast Fourier transformation (invert fast Fourier transformation, IFFT) is performed on **YD**_{Lm,m'}(n) and **YD**_{**C**m,m'}(n), to obtain a filtered output signal **yd**_{m,m'} obtained after adaptive filtering. ${yd}_{Lm ,m ′} \left(n\right) = IFFT \left({YD}_{Lm ,m ′}\left(n\right)\right) = \left[{y}_{Lm ,m ′}\left(1\right),{y}_{Lm ,m ′}\left(2\right),{y}_{Lm ,m ′}\left(3\right),…,{y}_{Lm ,m ′}\left(N\right)\right] ;$ ${yd}_{Cm ,m ′} \left(n\right) = IFFT \left({YD}_{Cm ,m ′}\left(n\right)\right) = \left[{y}_{Cm ,m ′}\left(1\right),{y}_{Cm ,m ′}\left(2\right),{y}_{Cm ,m ′}\left(3\right),…,{y}_{Cm ,m ′}\left(N\right)\right] ;$ and
**yd**_{m,m'}(n) = [0, 0, 0, ..., y_{Lm,m'}(N - M/2 + 1), y_{Lm,m'}(N - M/2 + 2), ..., y_{Lm,m'}(N), y_{Cm,m'}(N - M/2 + 1), y_{Cm,m'}(N - M/2 + 2), ..., y_{Cm,m'}(N)], where first N-M elements in **yd**_{m,m'}(n) are 0.

1.4. A noise suppression residual signal **ed**_{m,m'}(n) is calculated: ${ed}_{m ,m ′} \left(n\right) = {d}_{m} \left(n\right) - {yd}_{m ,m ′} \left(n\right) .$

1.5. A frequency domain noise suppression reference signal **ED**_{m,m} is calculated: $E {D}_{m ,m ′} \left(n\right) = FFT \left({ed}_{m ,m ′}\left(n\right)\cdot {w}_{s}\right) .$

1.6. A frequency domain zone-based noise suppression signal **D_{zm}**(n)[k] is calculated through frequency-domain fusion, and one with a minimum amplitude in **D**ₘ(n)[k] and **ED**_{m,m'}(n)[k] is selected as a value of **D_{zm}**(n)[k]. In other words, a frequency-domain fusion result needs to satisfy the following condition: $\left|{D}_{{z}_{m}}\left(n\right)\left[k\right]\right| = min \left\{\left|{D}_{m}\left(n\right)\left[k\right]\right|, \left|{ED}_{m ,m ′}\left(n\right)\left[k\right]\right|\right\} .$

Herein, k represents a frequency index sequence number of a frequency domain representation of an audio signal, m = 1, 2, ..., K_{M}, m' = 1, 2, ..., K_{M}, and m' ≠ m. A frequency-domain fusion result **D**_{**z**m}(n)[k] is a frequency domain representation of a frequency domain zone-based noise suppression signal.

In the foregoing process of zone-based suppression, in a process in which a microphone signal of a current area is denoised by using a microphone signal of another area as a reference, an echo signal picked up by a microphone in the another area is also used to perform echo cancellation on the current area. Therefore, even if a reverberation time period is long, because a signal picked up by the microphone in the another zone also include reverberation, a good denoising effect can be achieved in a subsequent echo cancellation part even if a filter with a short order is used.

### 2. Echo cancellation

For each zone-based noise signal suppression in each zone, a speaker signal **r**ₛ(n) is used as an echo reference, where s = 1, 2, ..., Kr. An echo in the zone-based noise suppression signal in the zone is suppressed by using an adaptive filtering algorithm (for example, a process of echo cancellation), to obtain a zone-based noise echo suppression signal in each zone. In the following descriptions, that the adaptive filtering algorithm WDAF is used to perform echo suppression is used as an example for description.

2.1. FFT transformation is performed on a speaker signal **r**ₛ(n) played by a speaker s, to obtain three frequency domain echo suppression signals **XR**ₛ(n), **XR**_{Cs}(n), and **XR**_{Ls}(n). ${XR}_{s} \left(n\right) = FFT \left({r}_{s}\left(n\right)\cdot {w}_{a}\right) .$

Herein, n represents a frame sequence number, FFT represents fast Fourier transformation, **wₐ** represents a window function, and the window function **wₐ** satisfies the following formula: **wₐ** = [sin(0.5/N*pi), sin(1.5/N*pi), sin(2.5/N*pi), ..., sin((N - 0.5)/N*pi)]; and ${XR}_{Cs} \left(n\right) = FFT \left({r}_{s}\left(n\right)\right) .$

Herein, n represents a frame sequence number, and FFT represents fast Fourier transformation. ${XR}_{Ls} \left(n\right) = FFT \left({r}_{s}\left(n-M/2\right)\right) .$

Herein, n represents a frame sequence number, FFT represents fast Fourier transformation, and **rₛ**(n - M/2) = [rₛ(Nn - N + 1 - M/2), rₛ(Nn - N + 2 - M/2), ..., rₛ(Nn - M/2)], **r**ₛ(n) = [rₛ(Nn - N + 1), rₛ(Nn - N + 2), ..., rₛ(Nn)].

2.2. The three frequency domain echo suppression signals **XR**ₛ(n), **XR**_{Cs}(n), and **XR**_{Ls}(n) are input into an adaptive filter, to obtain a filtered output **yr**_{m,s}(n).

2.2.1. Vector point multiplication is performed on an N-dimensional echo cancellation filter vector **HR**_{m,s}(n) and each of XRCs(n) and XRLs(n) is obtained, and a process is as follows: ${YR}_{Lm ,s} \left(n\right) = {XR}_{Ls} \left(n\right) \cdot {HR}_{m ,s} \left(n\right) , where m = 1,2 , … , {K}_{M} , and s = 1,2 , … , Kr;$ and ${YR}_{Cms} \left(n\right) = {XR}_{Cs} \left(n\right) \cdot {HR}_{m ,s} \left(n\right) , where m = 1,2 , … , {K}_{M} , and s = 1,2 , … , Kr .$

2.2.2. IFFT transformation is performed on **YR**_{Lm,s}(n) and **YR**_{Cms}(n), to obtain a filtered output signal **yr**_{m,s} obtained after adaptive filtering. ${yr}_{Lm , s} \left(n\right) = IFFT \left({YR}_{Lm , s}\left(n\right)\right) = \left[{yr}_{Lm , s}\left(1\right),{yr}_{Lm , s}\left(2\right),{yr}_{Lm , s}\left(3\right),…,{yr}_{Lm , s}\left(N\right)\right] ;$ ${yr}_{Cm , s} \left(n\right) = IFFT \left({YR}_{Cm , s}\left(n\right)\right) = \left[{yr}_{Cm , s}\left(1\right),{yr}_{Cm , s}\left(2\right),{yr}_{Cm , s}\left(3\right),…,{yr}_{Cm , s}\left(N\right)\right] ;$ and
**yr**_{m,s}(n) = [0, 0, 0, ..., yr_{Lm,s}(N - M/2 + 1), yr_{Lm,s}(N - M/2 + 2), ..., yr_{Lm,s}(N), yr_{Cm,s}(N - M/2 + 1), yr_{Cm,s}(N - M/2 + 2), ..., yr_{Cm,s}(N)], where first N-M elements in yrm,s(n) are 0.

2.3. A frequency domain filtered output **YR**_{m,s}(n) is calculated. ${YR}_{m , s} \left(n\right) = FFT \left({yr}_{m , s}\left(n\right)\cdot {w}_{s}\right) .$

Herein, n represents a frame sequence number, FFT represents fast Fourier transformation, **wₛ** represents a window function, the window function **wₛ** satisfies the following formula: **wₛ** = [0, 0, 0, ..., sin(0.5/M*pi), sin(1.5/M*pi), sin(2.5/M*pi), ..., sin((M - 0.5)/M*pi)], M indicates a length of an updating window, and first N-M elements in **wₛ** are 0.

2.4. An echo cancellation residual signal **er**_{m,s}(n) is calculated. ${er}_{m , s} \left(n\right) = {d}_{m} \left(n\right) - {yr}_{m , s} \left(n\right) .$

2.5. A frequency domain filtered residual signal is calculated. ${ER}_{m , s} \left(n\right) = {D}_{{z}_{m}} \left(n\right) - {YR}_{m , s} \left(n\right) .$

2.6. A frequency domain zone-based noise echo suppression signal **D**_{Fm}(n) is calculated through frequency-domain fusion, and one with a minimum amplitude in D_{zm}(n)[k] and **ER**_{m,s}(n)[k] is selected as a value of **D**_{**F**m}(n)[k]. In other words, a frequency-domain fusion result needs to satisfy the following formula: $\left|{D}_{{F}_{m}}\left(n\right)\left[k\right]\right| = min \left\{\left|{D}_{{z}_{m}}\left(n\right)\left[k\right]\right|, \left|{ER}_{m , s}\left(n\right)\left[k\right]\right|\right\} .$

Herein, k represents a frequency index sequence number of a frequency domain representation of an audio signal, m = 1, 2, ..., K_{M}, s = 1, 2, ..., Kr, **D**_{**F**m}(n) is a frequency domain zone-based noise echo suppression signal, namely, an expected clean signal.

It can be learned from the foregoing descriptions that the speaker signal rₛ(n) may be used as an echo reference for the zone-based noise suppression signal of each zone. The speaker signal rₛ(n) may be speaker signals of all speakers. In other words, s = 1, 2, ..., Ks. Alternatively, the speaker signal rₛ(n) may be speaker signals of some speakers, for example, speaker signals of some speakers near an area of a current microphone. For example, for an m^{th} area, sequence numbers of speakers close to a microphone in the area may include s₁, s₂, ..., sₘ. In this case, echo cancellation may be performed on a zone-based noise suppression signal by using only speaker signals of the m speakers. Therefore, computing resource consumption of echo cancellation can be reduced when echo suppression performance is ensured.

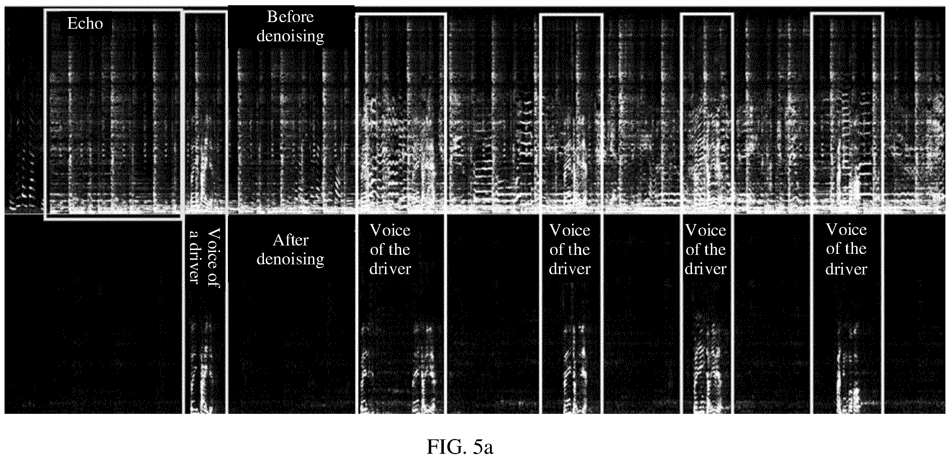

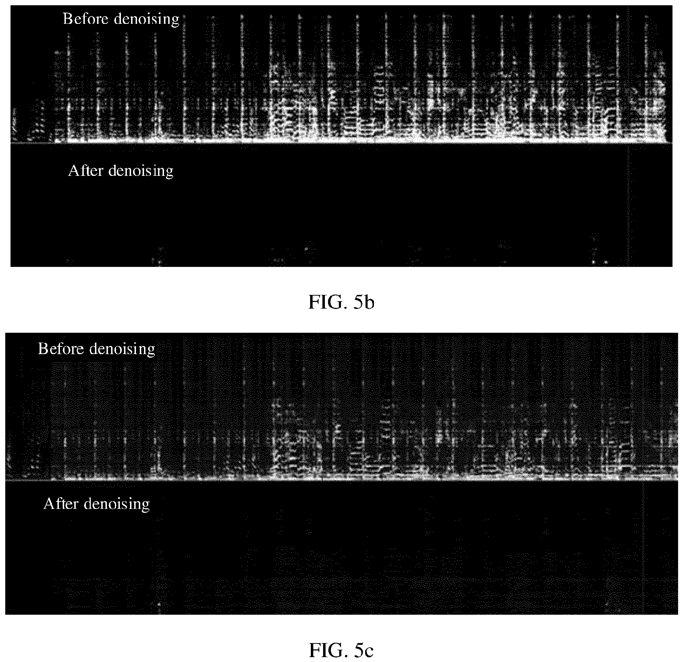

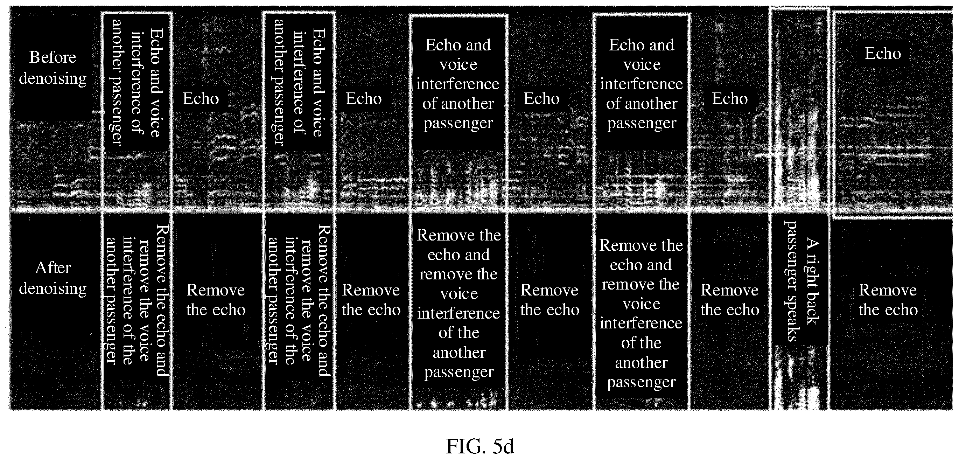

In a possible implementation, the audio denoising method provided in this embodiment of this application may be used to denoise an audio denoising method collected by a microphone. It is assumed there is a 4-zone vehicle-mounted audio system, including four microphones. The four microphones are respectively located in an area of a driving seat, an area of a passenger seat, an area of a left back seat, and an area of a right back seat. In addition, a microphone 1 in the four microphones is configured to collect an audio signal of the driving seat in the area of the driving seat, a microphone 2 is configured to collect an audio signal of a passenger seat in the area of the passenger seat, a microphone 3 is configured to collect an audio signal of a left back passenger in the area of the left back seat, and a microphone 4 is configured to collect an audio signal of a right back passenger in the area of the right back seat. As shown in FIG. 5a, after the audio signal collected by the microphone 1 is denoised in the method provided in this embodiment of this application, a voice of the driving seat may be clearly extracted from noise. As shown in FIG. 5b, because there is no corresponding passenger in the passenger seat, after the audio signal collected by the microphone 2 is denoised in the method provided in this embodiment of this application, it can be learned that noise and an echo are much cleaner. Similarly, as shown in FIG. 5c, because there is no corresponding passenger in the left back seat, after the audio signal collected by the microphone 3 is denoised in the method provided in this embodiment of this application, it can be learned that noise and an echo are much cleaner. As shown in FIG. 5d, after the audio signal collected by the microphone 4 is denoised in the method provided in this embodiment of this application, a voice of a corresponding passenger in a right back seat may be clearly extracted from noise. It should be noted that in the four accompanying drawings in FIG. 5a to FIG. 5d, a horizontal axis coordinate represents a time point, and a vertical axis coordinate represents a frequency.

It can be understood that, in the foregoing method embodiment, a method and an operation implemented by a vehicle may also be implemented by a component (for example, a chip, a circuit, or another component) in the vehicle. To implement functions in the method provided in the foregoing embodiment of this application, the vehicle may include a hardware structure and/or a software module, to implement the foregoing functions in a form of the hardware structure, the software module, or a combination of the hardware structure and the software module. Whether one of the foregoing functions is performed in the manner of the hardware structure, the software unit, or the hardware structure and the software unit depends on a specific application and design constraints of the technical solutions.

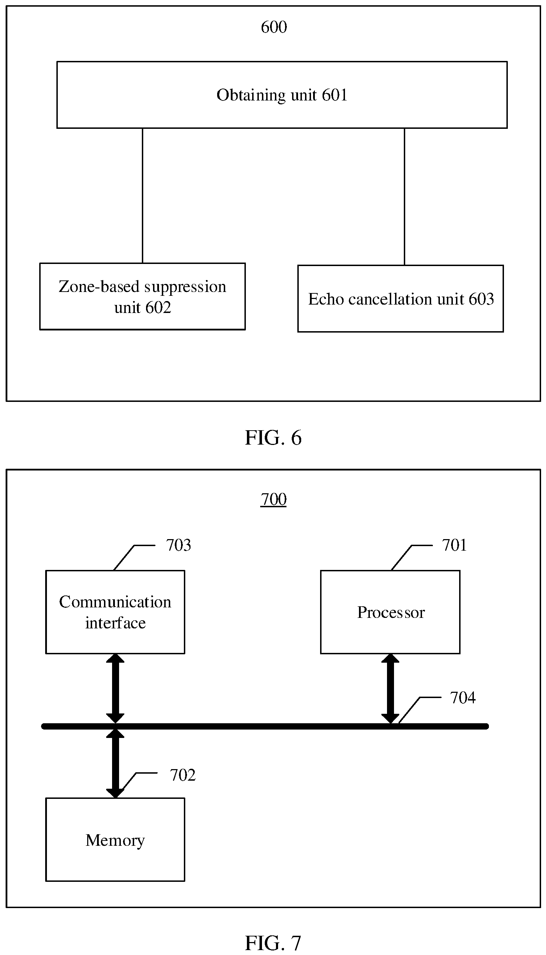

The foregoing describes in detail the method provided in embodiments of this application with reference to FIG. 1 to FIG. 5. The following describes in detail an apparatus provided in embodiments of this application with reference to FIG. 6 and FIG. 7. It should be understood that descriptions of the apparatus embodiments correspond to descriptions of the method embodiment. Therefore, for content not described in detail, refer to descriptions in the foregoing method embodiment.

FIG. 6 is a schematic block diagram of an apparatus 600 according to an embodiment of this application. The apparatus 600 is configured to implement a function of the vehicle in the foregoing method. For example, the apparatus may be a software unit or a chip system. The chip system may include a chip, or may include a chip and another discrete device. The apparatus may include an obtaining unit 601, a zone-based suppression unit 602, and an echo cancellation unit 603.

In an example, the obtaining unit 601 is configured to obtain a first audio signal that is of a target acoustic source in a corresponding area and that is collected by a first microphone, a second audio signal that is of a target acoustic source in a corresponding area and that is collected by a second microphone, and a fourth audio signal played by a first speaker, where the first microphone, the second microphone, and the first speaker are disposed in a target environment, and the first microphone and the second microphone are disposed in different areas of the target environment. The zone-based suppression unit 602 is configured to denoise the first audio signal based on the second audio signal, to obtain a third audio signal. The echo cancellation unit 603 is configured to denoise the third audio signal based on the fourth audio signal, to obtain a fifth audio signal, where the fifth audio signal is an audio signal that is of the target acoustic source and that is obtained after interference is filtered out.

Optionally, when there is one second microphone, there is one second audio signal. That the zone-based suppression unit 602 denoises the first audio signal based on the second audio signal, to obtain a third audio signal includes: performing adaptive filtering on the second audio signal, to obtain a first filtered output signal; obtaining a first residual signal based on a difference between the first audio signal and the first filtered output signal; and obtaining the third audio signal based on the first residual signal.

Optionally, that the zone-based suppression unit 602 obtains the third audio signal based on the first residual signal includes: determining the third audio signal based on a frequency domain amplitude comparison between the first residual signal and the first audio signal.

When, in accordance with the claimed invention, there are a plurality of second microphones, there are a plurality of second audio signals. That the zone-based suppression unit 602 denoises the first audio signal based on the second audio signal, to obtain a third audio signal includes: separately performing the following processing on each second audio signal, to obtain a residual signal corresponding to each second audio signal: performing adaptive filtering on the second audio signal, to obtain a second filtered output signal; obtaining a second residual signal based on a difference between the first audio signal and the second filtered output signal; and obtaining the third audio signal based on a plurality of second residual signals.

Optionally, that the zone-based suppression unit 602 obtains the third audio signal based on a plurality of second residual signals includes: determining the third audio signal based on a frequency domain amplitude comparison between the first audio signal and the plurality of second residual signals.

Optionally, when there is one first speaker, there is one fourth audio signal. That the echo cancellation unit 603 denoises the third audio signal based on the fourth audio signal, to obtain a fifth audio signal includes: performing adaptive filtering on the fourth audio signal, to obtain a third filtered output signal; obtaining a third residual signal based on a difference between the third audio signal and the third filtered output signal; and obtaining the fifth audio signal based on the third residual signal.

Optionally, that the echo cancellation unit 603 obtains the fifth audio signal based on the third residual signal includes: determining the fifth audio signal based on a frequency domain amplitude comparison between the third audio signal and the third residual signal.

Optionally, when there are a plurality of first speakers, there are a plurality of fourth audio signals. That the echo cancellation unit 603 denoises the third audio signal based on the fourth audio signal, to obtain a fifth audio signal includes: separately performing the following processing on each fourth audio signal, to obtain a residual signal corresponding to each fourth audio signal: performing adaptive filtering on the fourth audio signal, to obtain a fourth filtered output signal; obtaining a fourth residual signal based on a difference between the third audio signal and the fourth filtered output signal; and obtaining the fifth audio signal based on a plurality of fourth residual signals.

Optionally, that the echo cancellation unit 603 obtains the fifth audio signal based on a plurality of fourth residual signals includes: determining the fifth audio signal based on a frequency domain amplitude comparison between the third audio signal and the plurality of fourth residual signals.

It should be noted that the apparatus shown in FIG. 6 may be implemented by a processor, may be implemented by a hardware circuit, may be implemented in another manner, or the like. This is not limited.

Division into the units in embodiments of this application is an example, is merely division into logical functions, and may be other division during actual implementation. In addition, functional units in embodiments of this application may be integrated into one processor, or each of the units may exist alone physically, or two or more units may be integrated into one unit. The integrated unit may be implemented in a form of hardware, or may be implemented in a form of a software functional unit.

FIG. 7 is a schematic block diagram of an apparatus 700 according to an embodiment of this application. The apparatus is applicable to the procedure in FIG. 2, and perform a function of the vehicle in the method embodiment. For ease of description, FIG. 7 shows only a main component of the communication apparatus.

The communication apparatus 700 shown in FIG. 7 includes at least one processor 701. The communication apparatus 700 may further include at least one memory 702, configured to store program instructions and/or data. The memory 702 is coupled to the processor 701. The coupling in this embodiment of this application is an indirect coupling or a communication connection between apparatuses, units, or modules, may be in an electrical form, a mechanical form, or another form, and is used for information exchange between the apparatuses, the units, or the modules. The processor 701 may cooperate with the memory 702, the processor 701 may execute the program instructions stored in the memory 702, and at least one of the at least one memory 702 may be included in the processor 701.

The apparatus 700 may further include a communication interface 703, configured to communicate with another device by using a transmission medium, so that the communication apparatus 700 may communicate with the another device. In this embodiment of this application, the communication interface may be a transceiver, a circuit, a bus, a module, or another type of communication interface. In this embodiment of this application, when the communication interface is a transceiver, the transceiver may include an independent receiver and an independent transmitter, or may be a transceiver on which receiving and sending functions are integrated, or an interface circuit.

It should be understood that a connection medium between the processor 701, the memory 702, and the communication interface 703 is not limited in this embodiment of this application. In this embodiment of this application, in FIG. 7, the memory 702, the processor 701, and the communication interface 703 are connected by using a communication bus 704. The bus is represented by using a thick line in FIG. 7. A manner of connecting other components is merely an example for description, and does not impose a limitation. The bus may include an address bus, a data bus, a control bus, and the like. For ease of representation, in FIG. 7, only one thick line is used for representation, but this does not mean that there is only one bus, only one type of bus, or the like.

In an example, the processor 701 is configured to: obtain a first audio signal that is of a target acoustic source in a corresponding area and that is collected by a first microphone, and obtain a second audio signal that is of a target acoustic source in a corresponding area and that is collected by a second microphone and a fourth audio signal played by a first speaker, where the first microphone, the second microphone, and the first speaker are disposed in a target environment, and the first microphone and the second microphone are disposed in different areas of the target environment. The processor 701 is further configured to: denoise the first audio signal based on the second audio signal, to obtain a third audio signal; and denoise the third audio signal based on the fourth audio signal, to obtain a fifth audio signal, where the fifth audio signal is an audio signal that is of the target acoustic source and that is obtained after interference is filtered out.

Optionally, when there is one second microphone, there is one second audio signal, that the processor 701 denoises the first audio signal based on the second audio signal, to obtain a third audio signal includes:
performing adaptive filtering on the second audio signal, to obtain a first filtered output signal; obtaining a first residual signal based on a difference between the first audio signal and the first filtered output signal; and obtaining the third audio signal based on the first residual signal.

Optionally, that the processor 701 obtains the third audio signal based on the first residual signal includes: determining the third audio signal based on a frequency domain amplitude comparison between the first residual signal and the first audio signal.

When, in accordance with the claimed invention, there are a plurality of second microphones, there are a plurality of second audio signals, that the processor 701 denoises the first audio signal based on the second audio signal, to obtain a third audio signal includes:
separately performing the following processing on each second audio signal, to obtain a residual signal corresponding to each second audio signal: performing adaptive filtering on the second audio signal, to obtain a second filtered output signal; obtaining a second residual signal based on a difference between the first audio signal and the second filtered output signal; and obtaining the third audio signal based on a plurality of second residual signals.

Optionally, that the processor 701 obtains the third audio signal based on a plurality of second residual signals includes: determining the third audio signal based on a frequency domain amplitude comparison between the first audio signal and the plurality of second residual signals.

Optionally, when there is one first speaker, there is one fourth audio signal, that the processor 701 denoises the third audio signal based on the fourth audio signal, to obtain a fifth audio signal includes:
performing adaptive filtering on the fourth audio signal, to obtain a third filtered output signal; obtaining a third residual signal based on a difference between the third audio signal and the third filtered output signal; and obtaining the fifth audio signal based on the third residual signal.

Optionally, that the processor 701 obtains the fifth audio signal based on the third residual signal includes: determining the fifth audio signal based on a frequency domain amplitude comparison between the third audio signal and the third residual signal.

Optionally, when there are a plurality of first speakers, there are a plurality of fourth audio signals. That the processor 701 denoises the third audio signal based on the fourth audio signal, to obtain a fifth audio signal includes: separately performing the following processing on each fourth audio signal, to obtain a residual signal corresponding to each fourth audio signal: performing adaptive filtering on the fourth audio signal, to obtain a fourth filtered output signal; obtaining a fourth residual signal based on a difference between the third audio signal and the fourth filtered output signal; and obtaining the fifth audio signal based on a plurality of fourth residual signals.

Optionally, that the processor 701 obtains the fifth audio signal based on a plurality of fourth residual signals includes: determining the fifth audio signal based on a frequency domain amplitude comparison between the third audio signal and the plurality of fourth residual signals.

Further, an embodiment of this application further provides an apparatus. The apparatus is configured to perform the method in the procedure shown in FIG. 2. A computer-readable storage medium includes a program. When the program is run by a processor, the method in the procedure shown in FIG. 2 is performed. A computer program product is provided. The computer program product includes computer program code, and when the computer program code is run on a computer, the computer is enabled to perform the method in the procedure shown in FIG. 2. A chip is provided, and includes a processor. The processor is coupled to a memory, the memory is configured to store a program or instructions, and when the program or the instructions are executed by the processor, the apparatus is enabled to perform the method in the procedure shown in FIG. 2.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps in the methods disclosed with reference to embodiments of this application may be directly performed by a hardware processor, or may be performed by using a combination of hardware in the processor and a software module.

In this embodiment of this application, the memory may be a nonvolatile memory, for example, a hard disk drive (hard disk drive, HDD) or a solid state drive (solid-state drive, SSD), or may be a volatile memory (volatile memory), for example, a random access memory (random-access memory, RAM). The memory is any other medium that can be configured to carry or store expected program code in a form of an instruction structure or a data structure and that can be accessed by a computer, but is not limited thereto. The memory in this embodiment of this application may be alternatively a circuit or any other apparatus that can implement a storage function, and is configured to store program instructions and/or data.

All or some of the methods provided in embodiments of this application may be implemented by using software, hardware, firmware, or any combination thereof. When software is used to implement the methods, all or some of the methods may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

It is clear that a person skilled in the art can make various modifications and variations to this application without departing from the scope of this application.

## Claims

1. An audio denoising method, comprising:
disposing a first microphone and a second microphone in a target environment, wherein the first microphone and the second microphone are disposed in different areas in the target environment;
obtaining a first audio signal that is of a target acoustic source in a corresponding area and that is collected by the first microphone;
obtaining a second audio signal that is in a corresponding area and that is collected by the second microphone;
denoising the first audio signal based on the second audio signal, to obtain a third audio signal;
obtaining a fourth audio signal played by a first speaker, wherein the first speaker is disposed in the target environment; and
denoising the third audio signal based on the fourth audio signal, to obtain a fifth audio signal, wherein the fifth audio signal is an audio signal that is of the target acoustic source and that is obtained after interference is filtered out, wherein there are a plurality of second microphones, there are a plurality of second audio signals, and the denoising the first audio signal based on the second audio signal, to obtain a third audio signal comprises:
separately performing the following processing on each second audio signal, to obtain a residual signal corresponding to each second audio signal:
performing adaptive filtering on the second audio signal, to obtain a second filtered output signal;
obtaining a second residual signal based on a difference between the first audio signal and the second filtered output signal; and
obtaining the third audio signal based on a plurality of second residual signals.

2. The method according to claim 1, wherein the obtaining the third audio signal based on a plurality of second residual signals comprises:
determining the third audio signal based on a frequency domain amplitude comparison between the first audio signal and the plurality of second residual signals.

3. The method according to any one of claims 1 to 2, wherein when there is one first speaker, there is one fourth audio signal, and the denoising the third audio signal based on the fourth audio signal, to obtain a fifth audio signal comprises:
performing adaptive filtering on the fourth audio signal, to obtain a third filtered output signal;
obtaining a third residual signal based on a difference between the third audio signal and the third filtered output signal; and
obtaining the fifth audio signal based on the third residual signal.

4. The method according to claim 3, wherein the obtaining the fifth audio signal based on the third residual signal comprises:
determining the fifth audio signal based on a frequency domain amplitude comparison between the third audio signal and the third residual signal.

5. The method according to any one of claims 1 to 2, wherein when there are a plurality of first speakers, there are a plurality of fourth audio signals, and the denoising the third audio signal based on the fourth audio signal, to obtain a fifth audio signal comprises:
separately performing the following processing on each fourth audio signal, to obtain a residual signal corresponding to each fourth audio signal:
performing adaptive filtering on the fourth audio signal, to obtain a fourth filtered output signal;
obtaining a fourth residual signal based on a difference between the third audio signal and the fourth filtered output signal; and
obtaining the fifth audio signal based on a plurality of fourth residual signals.

6. The method according to claim 5, wherein the obtaining the fifth audio signal based on a plurality of fourth residual signals comprises:
determining the fifth audio signal based on a frequency domain amplitude comparison between the third audio signal and the plurality of fourth residual signals.

7. An apparatus, configured to perform the method of any one of claims 1 to 6.

8. A computer-readable storage medium, comprising a program, wherein when the program is run by a processor, the method according to any one of claims 1 to 6 is performed.

9. A computer program product when executed by a processor, cause the processor to carry out the steps of the method of any one of claims 1 to 6.

## Patentansprüche

1. Audiorauschunterdrückungsverfahren, das umfasst:
Anordnen eines ersten Mikrofons und eines zweiten Mikrofons in einer Zielumgebung, wobei das erste Mikrofon und das zweite Mikrofon in unterschiedlichen Bereichen in der Zielumgebung angeordnet sind;
Erhalten eines ersten Audiosignals, das von einer Zielakustikquelle in einem entsprechenden Bereich stammt und das durch das erste Mikrofon aufgenommen wird; Erhalten eines zweiten Audiosignals, das in einem entsprechenden Bereich ist und das durch das zweite Mikrofon aufgenommen wird;
Rauschunterdrücken des ersten Audiosignals basierend auf dem zweiten Audiosignal, um ein drittes Audiosignal zu erhalten;
Erhalten eines vierten Audiosignals, das durch einen ersten Lautsprecher abgespielt wird, wobei der erste Lautsprecher in der Zielumgebung angeordnet ist; und
Rauschunterdrücken des dritten Audiosignals basierend auf dem vierten Audiosignal, um ein fünftes Audiosignal zu erhalten, wobei das fünfte Audiosignal ein Audiosignal ist, das von der Zielakustikquelle stammt und das erhalten wird, nachdem Störungen herausgefiltert sind, wobei eine Vielzahl von zweiten Mikrofonen vorhanden ist, eine Vielzahl von zweiten Audiosignalen vorhanden ist und das Rauschunterdrücken des ersten Audiosignals basierend auf dem zweiten Audiosignal, um ein drittes Audiosignal zu erhalten, umfasst:
Separates Durchführen des folgenden Verarbeitens an jedem zweiten Audiosignal, um ein Restsignal, das jedem zweiten Audiosignal entspricht, zu erhalten:
Durchführen eines adaptiven Filterns an dem zweiten Audiosignal, um ein zweites gefiltertes Ausgangssignal zu erhalten;
Erhalten eines zweiten Restsignals basierend auf einer Differenz zwischen dem ersten Audiosignal und dem zweiten gefilterten Ausgangssignal; und
Erhalten des dritten Audiosignals basierend auf einer Vielzahl von zweiten Restsignalen.

2. Verfahren nach Anspruch 1, wobei das Erhalten des dritten Audiosignals basierend auf einer Vielzahl von zweiten Restsignalen umfasst:
Bestimmen des dritten Audiosignals basierend auf einem
Frequenzbereichamplitudenvergleich zwischen dem ersten Audiosignal und der Vielzahl von zweiten Restsignalen.

3. Verfahren nach einem der Ansprüche 1 bis 2, wobei, wenn ein erster Lautsprecher vorhanden ist, ein viertes Audiosignal vorhanden ist, und das Rauschunterdrücken des dritten Audiosignals basierend auf dem vierten Audiosignal, um ein fünftes Audiosignal zu erhalten, umfasst:
Durchführen des adaptiven Filterns an dem vierten Audiosignal, um ein drittes gefiltertes Ausgangssignal zu erhalten;
Erhalten eines dritten Restsignals basierend auf einer Differenz zwischen dem dritten Audiosignal und dem dritten gefilterten Ausgangssignal; und
Erhalten des fünften Audiosignals basierend auf dem dritten Restsignal.

4. Verfahren nach Anspruch 3, wobei das Erhalten des fünften Audiosignals basierend auf dem dritten Restsignal umfasst:
Bestimmen des fünften Audiosignals basierend auf einem
Frequenzbereichamplitudenvergleich zwischen dem dritten Audiosignal und dem dritten Restsignal.

5. Verfahren nach einem der Ansprüche 1 bis 2, wobei, wenn eine Vielzahl von ersten Lautsprechern vorhanden ist, eine Vielzahl von vierten Audiosignalen vorhanden ist, und das Rauschunterdrücken des dritten Audiosignals basierend auf dem vierten Audiosignal, um ein fünftes Audiosignal zu erhalten, umfasst:
Separates Durchführen des folgenden Verarbeitens an jedem vierten Audiosignal, um ein Restsignal, das jedem vierten Audiosignal entspricht, zu erhalten:
Durchführen des adaptiven Filterns an dem vierten Audiosignal, um ein viertes gefiltertes Ausgangssignal zu erhalten;
Erhalten eines vierten Restsignals basierend auf einer Differenz zwischen dem dritten Audiosignal und dem vierten gefilterten Ausgangssignal; und
Erhalten des fünften Audiosignals basierend auf einer Vielzahl von vierten Restsignalen.

6. Verfahren nach Anspruch 5, wobei das Erhalten des fünften Audiosignals basierend auf einer Vielzahl von vierten Restsignalen umfasst:
Bestimmen des fünften Audiosignals basierend auf einem
Frequenzbereichamplitudenvergleich zwischen dem dritten Audiosignal und der Vielzahl von vierten Restsignalen.

7. Einrichtung, die konfiguriert ist, um das Verfahren nach einem der Ansprüche 1 bis 6 durchzuführen.

8. Computerlesbares Speichermedium, das ein Programm umfasst, wobei, wenn das Programm durch einen Prozessor ausgeführt wird, das Verfahren nach einem der Ansprüche 1 bis 6 durchgeführt wird.

9. Computerprogrammprodukt, das, wenn es durch einen Prozessor ausgeführt wird, den Prozessor veranlasst, die Schritte des Verfahrens nach einem der Ansprüche 1 bis 6 vorzunehmen.

## Revendications

1. Procédé de débruitage audio, comprenant :
la disposition d'un premier microphone et d'un second microphone dans un environnement cible, dans lequel le premier microphone et le second microphone sont disposés dans des zones différentes de l'environnement cible ;
l'obtention d'un premier signal audio qui provient d'une source acoustique cible dans une zone correspondante et qui est recueilli par le premier microphone ;
l'obtention d'un deuxième signal audio qui se trouve dans une zone correspondante et qui est recueilli par le second microphone ;
le débruitage du premier signal audio sur la base du deuxième signal audio, pour obtenir un troisième signal audio ;
l'obtention d'un quatrième signal audio joué par un premier haut-parleur, dans lequel le premier haut-parleur est disposé dans l'environnement cible ; et
le débruitage du troisième signal audio basé sur le quatrième signal audio, pour obtenir un cinquième signal audio, dans lequel le cinquième signal audio est un signal audio qui provient de la source acoustique cible et qui est obtenu après filtrage des interférences, dans lequel il y a une pluralité de seconds microphones, il y a une pluralité de deuxièmes signaux audio, et le débruitage du premier signal audio basé sur le deuxième signal audio, pour obtenir un troisième signal audio comprend :
la réalisation séparée du traitement suivant sur chaque deuxième signal audio, pour obtenir un signal résiduel correspondant à chaque deuxième signal audio :
la réalisation d'un filtrage adaptatif sur le deuxième signal audio, pour obtenir un deuxième signal de sortie filtré ;
l'obtention d'un deuxième signal résiduel basé sur une différence entre le premier signal audio et le deuxième signal de sortie filtré ; et
l'obtention du troisième signal audio sur la base d'une pluralité de deuxièmes signaux résiduels.

2. Procédé selon la revendication 1, dans lequel l'obtention du troisième signal audio sur la base d'une pluralité de deuxièmes signaux résiduels comprend :
la détermination du troisième signal audio sur la base d'une comparaison d'amplitude de domaine fréquentiel entre le premier signal audio et la pluralité de deuxièmes signaux résiduels.

3. Procédé selon l'une quelconque des revendications 1 à 2, dans lequel lorsqu'il y a un premier haut-parleur, il y a un quatrième signal audio, et le débruitage du troisième signal audio sur la base du quatrième signal audio, pour obtenir un cinquième signal audio comprend :
la réalisation d'un filtrage adaptatif sur le quatrième signal audio, pour obtenir un troisième signal de sortie filtré ;
l'obtention d'un troisième signal résiduel sur la base d'une différence entre le troisième signal audio et le troisième signal de sortie filtré ; et
l'obtention du cinquième signal audio sur la base du troisième signal résiduel.

4. Procédé selon la revendication 3, dans lequel l'obtention du cinquième signal audio sur la base du troisième signal résiduel comprend :
la détermination du cinquième signal audio sur la base d'une comparaison d'amplitude de domaine fréquentiel entre le troisième signal audio et le troisième signal résiduel.

5. Procédé selon l'une quelconque des revendications 1 à 2, dans lequel lorsqu'il y a une pluralité de premiers haut-parleurs, il y a une pluralité de quatrièmes signaux audio, et le débruitage du troisième signal audio sur la base du quatrième signal audio, pour obtenir un cinquième signal audio comprend :
la réalisation séparée du traitement suivant sur chaque quatrième signal audio, pour obtenir un signal résiduel correspondant à chaque quatrième signal audio :
la réalisation d'un filtrage adaptatif sur le quatrième signal audio, pour obtenir un quatrième signal de sortie filtré ;
l'obtention d'un quatrième signal résiduel sur la base d'une différence entre le troisième signal audio et le quatrième signal de sortie filtré ; et
l'obtention du cinquième signal audio sur la base d'une pluralité de quatrièmes signaux résiduels.

6. Procédé selon la revendication 5, dans lequel l'obtention du cinquième signal audio sur la base d'une pluralité de quatrièmes signaux résiduels comprend :
la détermination du cinquième signal audio sur la base d'une comparaison d'amplitude de domaine fréquentiel entre le troisième signal audio et la pluralité de quatrièmes signaux résiduels.

7. Appareil, configuré pour réaliser le procédé selon l'une quelconque des revendications 1 à 6.

8. Support de stockage lisible par ordinateur, comprenant un programme, dans lequel, lorsque le programme est exécuté par un processeur, le procédé selon l'une quelconque des revendications 1 à 6 est réalisé.

9. Produit-programme d'ordinateur lorsqu'il est exécuté par un processeur, amène le processeur à mettre en oeuvre les étapes du procédé selon l'une quelconque des revendications 1 à 6.
